# EUROPEAN PATENT SPECIFICATION

(11) **EP 0 468 913 B1**
(45) Date of publication and mention of the grant of the patent: **03.04.1996**
(21) Application number: 91500081.4
(22) Date of filing: 25.07.1991
(51) Int. Cl.: H04M 17/02

(54) **Modular public telephones operating system**
Betriebssystem für modulare öffentliche Fernsprechgeräte
Système d'exploitation pour téléphones publics modulaires

(30) Priority: 27.07.1990 ES 9002024
(43) Date of publication of application: 29.01.1992
(73) Proprietor: TELEFONICA DE ESPANA, S.A., E-28013 Madrid (ES)
(72) Inventor: Ibanez Palomeque, Francisco, E-28050 Madrid (ES); Mir Cepria, José, E-28013 Madrid (ES)
(74) Representative: Carpintero Lopez, Francisco

(56) References cited:
- FR-A- 2 624 679
- TELCOM REPORT vol. 13, no. 1, January 1990, M NCHEN, DE pages 28 - 31 , XP127514 F.K. K STER ' ffentliche Kommunikation "à la carte" und " à conto"'

## Description

### SPECIFICATION

### OBJECT OF THE INVENTION

The subject invention relates to a modular public telephones operating system that is clearly intended to programme, supervise and control both the telephones and other equipment and systems that make up the modular public telephone management system.

### FIELD OF THE INVENTION

This invention is applicable within the field of telecommunications, in particular as part of the infrastructure required for the new public telephone service to work properly, this service allowing calls to be made using various means of payment.

### BACKGROUND TO THE INVENTION

A patent relating to a modular telephone is known to have been filed on behalf of COMPAÑIA TELEFONICA DE ESPAÑA, S.A.

The above-mentioned modular telephones are intelligent public telephones that take coins, phonecards and credit cards as payment for using the same.

For connection of modular telephones to the modulated telephone network, a patent of invention was filed at the time for a validation and identification unit specifically aimed at identifying and authorising connection of the modular telephones to the switched telephone network, validating or otherwise call requests using credit cards as means of payment.

A patent of invention for a modular telephones adaptation unit is also known to exist, aimed at validating credit transactions of modular telephones that are not connected to the validation and identification units.

However, within the scope of application of different systems and devices for modular public telephones to work in perfect harmony, no system is envisaged for operating the same.

There is knowledge of the existence of various systems for operating known equipment or systems that cannot be used for this sort of modular public telephones, for their particular idiosyncrasy is very different from traditional operating systems.

Existing public telephones (see for example TELCOM REPORT, vol. 13, no.1, January 1990, DE, pages 28-31 by F.K Köster, entitled "Öffentliche Kommunication "à la carte" und "à conto") management systems operate the public telephone network working with cards only. The problem with these systems lies in that they cannot be used with either coins, chip cards issued by the operator and magnetic cards, and therefore have no modular telephone access units, validation and identification units to control and identify connected modular public telephones, and connect from the switched telephone network to the packet switching network, nor is there a validation and invoicing centre (VIC) for validating credit cards nationwide, other than so-called "Connection Unit" equipment which functions generally to control and validate cards locally.

Clearly, a solution to this would be a modular public telephones operating system, totally and definitively integrating the modular public telephone management system and having special characteristics suited to the novelty of the equipment and cooperating in harmony with the other units and systems used heretofore in order to execute the various functions that must be used for modular public telephones connected to the switched telephone network to work properly.

There is no record of any existing ideal system to date.

### DESCRIPTION OF THE INVENTION

The modular public telephones operating system is in itself clearly a solution to the problems entailed nowadays by one of the supplementary functions that must be carried out within the various services and operations to be executed for the modular telephones connected to the switched telephone network to fulfil their mission in an ideal fashion.

More specifically, the modular public telephones operating system subject hereof is provincially in charge of centralising the alarms reported by the modular telephones, the validation and identification units and the modular telephones adaptation units.

Similarly, the modular public telephones operating system is in charge of reporting breakdowns and repairs, and issuing statistical reports and in turn teleprogramming the modular telephones, the validation and identification units and the modular telephones adaptation units.

More succinctly, the modular public telephones operating system (MPTOS) is what allows both modular telephones and validation units and access units making up the modular telephone management system to be programmed, supervised and controlled.

At the same time, the modular public telephones operating system allows statistical information to be gathered from the data contained in its Database in order to verify the plant status, composition thereof, quality of the service and reliability of the terminals, carried load and takings.

The modular public telephones operating system comprises two main elements:
A.- The messages concentration unit (MCU).
B.- The central operating unit (COU).

The messages concentration unit (MCU) is the front-end for the central unit's communications, being capable of allowing various simultaneous communications with the system elements through the switched telephone network.

The central operating unit (COU) has two printer terminals for the system operator, and various screen terminals for the dispatchers, being provided with devices for storage of the hard disk type for rapid access and also of the tape type for long-term massive storage.

This modular public telephones operating system can communicate with modular telephones, validation and identification units and modular telephones adaptation units, in order to control and maintain the same, but in turn also communicates with regional invoicing centres (RIC) and with the (VIC), as appropriate.

The modular public telephones operating system performs the following operative steps:

The modular telephone (MT) communicates with the modular public telephones operating service through the validation and identification unit, if any, and if there is no such unit it will communicate directly in the following events:
- On detecting an alarm (TA message), it is sent when the modular telephone is definitively replaced after the alarm is given.

Alarms can be sent together with the collection message.
- Collection is conveyed (TE message), this message being sent at the end of the collection process.

In the event of there being alarms, both previous ones that could not be sent and those keyed upon collection, they will be sent as an alarm message after the TE message.
- Sending of the daily routine (TD message), this taking place when the modular telephone is definitively replaced or when the modular telephone activates itself, provided that the modular telephone is within the set hourly period for the sending of the daily routine.
- The telephone is being installed (TI message), such being sent as the lineman shall see fit.

All statistics and alarms are struck out and the modular public telephones operating system reacts with the TP message for the programming of parameters.
- The telephone (TB) is being repaired, which message is sent as the lineman sees fit.

The alarms are struck out, not so the statistics, and the modular public telephones operating service reacts with the TP message for the programming of parameters.
- The parameters are requested (TX message), such being sent when the modular telephone is definitely replaced, after an error is detected in the parameters. The modular public telephones operating service reacts with TP message for the programming of parameters.
- The modular telephone is disconnected (TH message), and the modular public telephones operating service includes such data among this telephone's general statistics as if it were a daily routine message.

Thereafter, the modular telephone remains disconnected and the message is sent as the lineman sees fit.

Set messages are always used for this purpose, according to a standard communications protocol.
- The validation and identification unit has a terminal for the input of basic data, allowing access to the service for the operation of modular public telephones, and for the service to be able to dump all operating parameters.

The validation and identification unit is then ready to perform its functions. On sending its daily routine message, the validation and identification unit sends the daily routine for all the modular telephones connected thereto.

The validation and identification unit lifts the external line off the hook in order to obtain a dialling tone.

Once the tone is detected, the validation and identification unit dials the number automatically, the number dialled being the number required to gain access to the modular public telephones operating system, in order to be connected once the carrier tone is obtained.

The modular telephones adaptation units (MTAU) have a terminal for the input of basic data, that allow access to the modular public telephones operating system, and this latter's loading of the operating parameters for the modular telephones adaptation unit, whereupon the MTAU is in a position to operate.

The modular telephones adaptation unit lifts its external line off the hook in order to obtain a dialling tone, and upon detecting this tone the actual unit automatically dials the number that allows access to the modular public telephones operating system in order to be connected once the carrier tone is obtained.

The modular public telephones operating system being described, among other functions to maintain and control the modular telephones, validation and identification unit and modular telephones adaptation unit, has the following in particular:
- Connections and disconnections in database.
- Teleprogramming parameters.
- Receiving alarms.
- Receiving notices of clearance and disconnection.
- Receiving daily routines.
- Receiving collections.
- Initialization messages.
- Immediate display messages.
- Other messages.
- Local functions.
- Plant maintenance.
- Modification of tables of parameters.
- Plant management.

Connections and disconnections in the database are used for normal modular public telephones operating system service, there being a database for modular telephones, validation and identification units, access units and tables of parameters associated to each of the terminals.

Parameters are teleprogrammed in accordance with a number of parameters that are programmed using remote control means, by sending TP/UP/VP messages, depending on whether it is a modular telephone, a validation and identification unit or a modular telephones adaptation unit.

Alarms are received because the modular public telephones operating service is able to receive alarm messages from all terminals assigned thereto, being moreover able to filter such messages so that the same alarm from the same terminal is ignored and no more than one warning is given at the dispatcher screens.

Alarm messages are stored in memory in order to set up a record of breakdowns.

Notices of clearance and disconnection are received when a terminal is repaired, and once the repair as such is over, a clearance message is sent identifying the faults repaired.

The clearance codes refer to six sub-divisions of paths existing in the modular public telephones operating system.

If it is not possible to repair a modular telephone, a disconnection message is sent, including all statistical data stored sent as daily routine.

Daily routines are received when the modular telephone sends a daily message setting forth the day's carried load, from the last daily routine message.

The modular public telephones operating service sends the data regarding collection and the extent to which the modular telephone's money-box is filled to the collector firm.

Furthermore, the load and collection data are processed to be sent to the regional invoicing centres or, otherwise, to the validation and invoicing centre dealing with the nationwide validation of credit cards, keeping black and grey lists thereof, and communicating with the card issuing centres.

Collections are received each time the money-box with the collection is removed from a modular telephone classified as being an own modular telephone, the modular public telephones operating service receiving a message on collection, the parameters associated to the message being reset to zero.

Initialization messages are sent out when modular public telephones operating system equipment is installed, communicating with the service at issue for the sending of all teleprogrammable parameters.

If the request is made by a validation and identification unit, the modular public telephones operating service sends the parameters associated to that validation and identification unit.

Messages for immediate display are given in response to certain messages by the modular telephone that require an operator to be sent, in which case the modular public telephones operating service can reply with a message for immediate display that appears on the modular telephone screen or at the validation and identification unit terminal, as appropriate.

Similarly, a validation and identification unit can be requested, from the modular public telephones operating service, and as the operator or dispatcher shall see fit, to provide a statement of activity for a given telephone, in reply to which message the validation and identification unit will inform of the time at which the modular telephone made the last call.

Furthermore, if the validation and identification unit detects an attempt at fraud in the use of the line by equipment alien to the system, it disables the line for subsequent calls, sending an alarm message to the modular public telephones operating service, thereby clearly pointing to the fact that messages other than initialization and immediate display messages can be readily sent out from the service at issue.

Similarly, for local functions, the console operator can execute all functions provided in the system for the operation of the modular public telephones, including specific functions of the dispatchers, which include connection or disconnection of various terminals, modifying parameters, generating breakdown reports, making clearances, obtaining print-outs and statistics.

As to the dispatchers, they may view the breakdowns pending by areas, presentation being given in the order assigned to the modular telephones within the area.

The dispatcher can also communicate with the lineman by sending messages.

For plant maintenance, plant elements can be Connected, Disconnected, Modified by inserting all necessary parameters for correct operation thereof.

The status of a plant element can also be viewed with all the current activity and parameters thereof.

In order to modify the tables of parameters that are known to vary according to the plant element at issue, the modular telephone is provided with a table to programme parameters relating to invoicing, collection, coins, cards, telephone numbers, frauds and the like.

The validation and identification unit and the modular telephones adaptation unit are provided with three tables to programme parameters relating to telephone numbers, IBERPAC network numbers and daily routine hours.

The modular public telephones operating system sends in a breakdown warning in the event of it not being possible to programme a parameter at a given element.

The date on which the changes in parameters are to enter into force can also be teleprogrammed.

Finally, the system, as aforesaid, manages the plant, this allowing various options within the same system, for instance plant inventories, management of breakdowns, management of collections, load reports, availability reports and grade of service.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

The only figure, numbered 1, is a block diagram of the modular public telephones operating system, with an overview of the functional units making it up.

### PREFERRED EMBODIMENT OF THE INVENTION

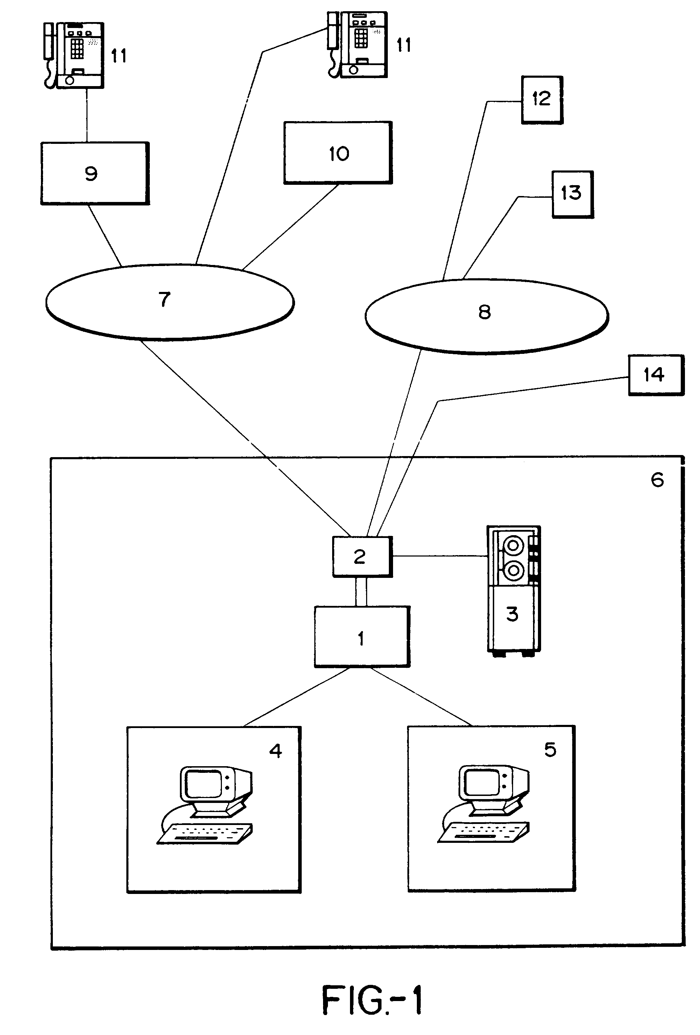

In view of the comments and descriptions set forth hereinbefore, and in light of the explanation given for figure 1, the functions set out hereinbefore imply that the software implemented is highly complex, and that communications are efficiently controlled, both through the switched telephone network and through the IBERPAC network.

The operating system (6) includes the central operating unit (1), and the messages concentration unit (2) that is fitted with information storage devices (3).

Number 4 designates the operator's console, while number 5 designates the dispatcher area.

The messages concentration unit (2) in turn communicates with the validation and identification unit (9) and the access unit (10) through the switched telephone network (7).

The messages concentration unit (2) communicates with the regional invoicing centre (12) and with the validation and invoicing centre (13) through Iberpac (8).

Similarly, the messages concentration unit (2) communicates with the collector firms' terminals (14) through a line established to such end.

The modular telephones are numbered (11) in the figure.

The messages involved in these functions of the modular public telephones operating system, and the timely data of some of the management functions that the actual system allows, are the following:
- Connection of a modular telephone.
- Connection of a validation and identification unit.
- Connection of an access unit.
- Disconnections at the database.
- Teleprogramming modular telephone parameters.

The parameters sent to the modular telephone to programme the same are contained in a "TP" message, which has the following structure and parameters:
- Leader.
- Parameters message code.
- Modular telephone identification.
- Date parameters are sent.
- Date teleprogramming enters into force.
- Ownership of the modular telephone.
- General breakdown threshold.
- Unit price.
- Local rate.
- Local period.
- Number of maximum local units.
- Minimum local balance.
- Minimum operating system balance.
- Minimum inter-city balance.
- Minimum international balance.
- Coin cancellation.
- International coin cancellation.
- Time without provincial rate.
- Time without inter-city rate.
- Time without international rate.
- Forbidden numbers.
- Free numbers.
- Operator access number.
- Numbers for access to the modular public telephone operating service.
- Access number to the modular telephones adaptation unit.
- Lock opening number.
- Official time change.
- Collection time-table.
- Daily routine time-table.
- Timings.
- Types of coins.
- Types of cards.
- Black list.
- Language.
- End of message.
- Longitudinal parity.

Similarly, the system allows parameters in the validation and identification unit to be teleprogrammed, and parameters in the access unit to be teleprogrammed.

In order to receive modular telephone alarms, alarm messages from modular telephones are identified by the "TA" code, this message being of variable length and containing all alarms pending communication by a telephone when communication is established with the modular public telephones operating service.

Alarms from a modular telephone are received in accordance with the following structure of alarms:
- Leader.
- Alarm message code.
- Modular telephone identification.
- Message number.
- Date of sending.
- General breakdowns (among them microtelephone breakdown, RAM failure, EPROM failure, permanent metering frequency, absence of metering pulses, earth failure, top door open, lower door open, 10% deviated metering frequency).
- Card breakdowns (among them card collection failure, card reader failure, card reader jamming).
- Coin breakdowns (for instance, coin collection failure, validator failure, middle store failure).
- Money-box incidents (for instance, money-box full, no money-box, 3/4 money-box, money-box burgled, loose money-box cable).
- General incidents (such as premature homing, incorrect voltage, clock failure, real time, fraud attempt, 3% deviated metering frequency, fraudulent collection, collector warning, identification fault).
- End of message.
- Longitudinal parity.
- Receiving alarms from a validation and identification unit.
- Receiving alarms from an access unit.
- Receiving clearance from a modular telephone.
- Receiving clearance from a validation and identification unit.
- Receiving clearance from an access unit.
- Disconnection of the modular telephone.
- Disconnection of the validation and identification unit.
- Disconnection of the access unit.
- Receiving daily routine from the modular telephone, which includes receipt of daily routine messages from the modular telephones identified by the "TD" code.

This is received with the following structure:
- Leader.
- Daily routine message code.
- Modular telephone identification.
- Message number.
- Date of sending.
- Breakdown not communicated.
- Call pulses (operating system, urban, provincial, inter-city, international, test).
- Length of call (operating service, urban, provincial, inter-city, international, test).
- Telephone number (operating system, urban, provincial, inter-city, international, test).
- Pesetas collected in coins, phonecards, credit cards.
- Pesetas collected by operator, coins, phonecards, credit cards.
- Metering pulses in coins, phonecards, credit cards.
- Number of calls with coins, phonecards, credit cards.
- Coins (different types).
- Cards (different types).
- Communication breakdown with the modular public telephone operating service.
- End of message.
- Longitudinal parity.
- Receipt of daily routine from the validation and identification unit.
- Receipt of daily routine from the access unit.
- Modular telephone collection.
- Modular telephone initialization.
- Validation and identification unit initialization.
- Access unit initialization.
- Immediate display at modular telephone.
- Immediate display at validation and identification unit.
- Immediate display at access unit.
- Modular telephone activity request.
- Modular telephone activity response.
- Replacement of fraud meters.
- Plant inventory (total province, maintenance area, locality, switching centre or validation and identification unit).
- Management of breakdowns (including maintenance, revisions, action with pending breakdowns, input of breakdown reports, clearance and print-outs).
- Collections management, including maintenance of data received in collection messages and in daily routine reports, and preparation of overall collection reports by province, locality and switching centre.
- Load reports, including maintenance of load data received by daily routines sent by the various equipment, and overall load by province, locality and switching centre.
- Availability reports and grade of service, including the number of breakdowns by set number and month, average breakdown time, average duration of reports at various elements, percentages of breakdowns delayed, etc.

## Claims

1. Modular public telephones operating system, comprising:
an operating system (6) including a central operating unit (1), a messages concentration unit (2) with storage devices (3), the central operating unit being in turn connected to the respective operator console (4) and dispatcher area console (5),
validation and identification units (9) connected via a switched telephone network (7) to the messages concentration unit (2),
access units (10) connected via switched telephone network (7) to the messages concentration unit (2),
modular telephones (11) connected directly via switched telephone network to the messages concentration unit,
means for connecting the messages concentration unit (2) to a regional invoicing centre (12) and a validation and invoicing centre (13) through telephone network (8),
means for connecting the messages concentration unit (2) to collecting entity terminals (14).

2. Modular public telephones operating system as in claim 1, characterised in that the central operating unit (1) has means for controlling the messages concentration unit (2), using it as front-end and likewise having means for managing the various system operator display screens and dispatchers auxiliary printers and screens.

3. Modular public telephones operating system, as in claim 1, characterised in that a set of tables of parameters is provided with which plant elements are programmed remotely and subsequently supervised and controlled.

4. Modular public telephones operating system, as in claims 1, characterised by means for real time maintenance control of the modular telephones, means for sending and receiving messages in various situations and means for direct communication between the dispatchers and the lineman dealing with the breakdown at the time of repair.

5. Modular public telephones operating system, as in claim 1, characterised in that the system is provided with operating and management software that yields manifold maintenance functions, plant elements status reports, load statistics, repairs and breakdowns control from the daily routine data according to programmable thresholds, the above recognising the status of the plant, composition thereof, quality of the service and reliability of the terminals.

## Patentansprüche

1. Betriebssystem für öffentliche modulare Fernsprecher, mit einem Betriebssystem (6), welches eine zentrale Betriebseinheit (1) und eine Einheit zur Zusammenfassung der Meldungen (2) mit Speichervorrichtungen (3) umfasst, wobei die zentrale Betriebseinheit ihrerseits am entsprechenden Bedienungspult (4) und am Pult des Abfertigungsbereiches (5) angeschlossen ist,
Validierungs- und Identifikationseinheiten (9), die über ein geschaltetes Fernsprechnetz (7) an der Einheit zur Zusammenfassung von Meldungen (2) angeschlossen sind;
Zugriffseinheiten (10), die über das geschaltete Fernsprechnetz (7) an der Einheit zur Zusammenfassung von Meldungen (2) angeschlossen sind;
Modularfernsprechern (11), die unmittelbar über das geschaltete Fernsprechnetz an der Einheit zur Zusammenfassung von Meldungen angeschlossen sind;
Mitteln für den Anschluss der Einheit zur Zusammenfassung von Meldungen (2) an eine regionale Fakturierungszentrale (12) und an eine Validierungs- und Fakturierungszentrale (13) über das Fernsprechnetz (8);
Mitteln für den Anschluss der Einheit zur Zusammenfassung von Meldungen (2) an Terminals der mit dem Inkasso beauftragten Firma (14).

2. Betriebssystem für öffentliche modulare Fernsprecher, nach Anspruch 1 dadurch gekennzeichnet, dass die zentrale Betriebseinheit (1) Mittel zur Kontrolle der Einheit zur Zusammenfassung von Meldungen (2) aufweist und dieselbe als Vorlaufelement benutzt, und daneben auch Mittel für die Bedienung diverser Anzeigebildschirme des Bedieners des Betriebssystems und Drucker sowie Hilfsbildschirme der Abfertiger besitzt.

3. Betriebssystem für öffentliche modulare Fernsprecher, nach Anspruch 1 dadurch gekennzeichnet, dass eine Reihe von Parametertabellen zur Verfügung gestellt werden, mit denen die Anlagenteile fernprogrammiert und später überwacht und gesteuert werden.

4. Betriebssystem für öffentliche modulare Fernsprecher, nach Anspruch 1 dadurch gekennzeichnet, dass Mittel zur Kontrolle der Wartung in Realzeit der Modularfernsprecher, Mittel zur Übertragung und zum Empfang von Meldungen in unterschiedlichen Situationen und Mittel für die unmittelbare Verbindung zwischen den Abfertigern und dem Bedienungspersonal der Leitung, welches die Störungen zum Zeitpunklt der Reparatur bearbeitet, vorhanden sind.

5. Betriebssystem für öffentliche modulare Fernsprecher, , nach Anspruch 1 dadurch gekennzeichnet, dass das System über Betriebs- und Verwaltungssoftware verfügt, welche - ausgehend von den Daten der Tagesroutine - in Übereinstimmung mit den programmierbaren Schwellen, diverse Wartungsfunktionen, Berichte über den Zustand der Anlagenteile, Statistiken über die Belastung, Reparatur- und Störungskontrolle bewirkt, wobei diese Software den Zustand der Anlage, ihre Zusammensetzung, die Servicequalität und die Zuverlässigkeit der Terminals erkennt.

## Revendications

1. Système opérationnel de téléphones publics modulaires, qui comprend:
un système opérationnel (6), qui inclut une unité centrale opérationnelle (1), une unité de concentration de messages (2) munie de dispositifs d'emmagasinage (3), l'unité centrale opérationnelle étant connectée, à son tour, au pupitre de l'opérateur correspondant (4) et au pupitre de l'envoyeur (5),
des unités de validation et d'identification (9) connectées à travers un réseau téléphonique de commutation (7) à l'unité de concentration de messages (2),
des unités d'accès (10) connectées directement à travers le réseau téléphonique de commutation (7) à l'unité de concentration de messages (2),
des téléphones modulaires (11) connectés directement à travers le réseau téléphonique de commutation à l'unité de concentration de messages,
des moyens pour connecter l'unité de concentration de messages (2) aux terminaux de l'entité qui encaisse (14).

2. Système opérationnel de téléphones publics modulaires selon la revendication 1, caractérisé par le fait que l'unité opérationnelle (1) ait des moyens de contrôle de l'unité de concentration de messages (2), en l'employant comme élément initial, et il a également des moyens pour gérer les différents écrans de visualisation de l'opération du système et les imprimantes ainsi que les écrans auxiliaires des envoyeurs.

3. Système opérationnel de téléphoniques modulaires selon la revendication 1, caractérisé par le fait que l'on fournisse un ensemble de tableaux de paramètres avec lesquels on programme à distance les éléments d l'installation et que l'on supervise et contrôle ensuite.

4. Système opérationnel de téléphoniques modulaires selon la revendication 1, caractérisé par des moyens pour le contrôle de maintien en temps réel des téléphones modulaires, des moyens pour transmettre et pour recevoir des messages dans différentes situations et des moyens pour la communication directe entre les envoyeurs et l'opérateur de ligne qui se charge des pannes au moment de la réparation.

5. Système opérationnel de téléphoniques modulaires selon la revendication 1, caractérisé par le fait que le système dispose d'un logiciel opérationnel et de gestion qui produit plusieurs fonctions de maintien, des rapports sur l'état des éléments de l'installation, des statistiques sur la charge, du contrôle de réparations et de pannes à partir des données de routine quotidienne selon des seuils programmables, ce logiciel reconnaissant l'état de l'installation, sa composition, la qualité du service et la fiabilité des terminaux.
